# EUROPÄISCHE PATENTSCHRIFT

(11) **EP 0 855 291 B1**
(45) Veröffentlichungstag und Bekanntmachung des Hinweises auf die Patenterteilung: **03.09.2003**
(21) Anmeldenummer: 98100827.9
(22) Anmeldetag: 20.01.1998
(51) Int. Cl.: B60C 11/04, B60C 11/11, B60C 11/13, B60C 11/01

(54) **Profil für PKW-Luftreifen**
Tread for car tyre
Profil de pneumatique pour voiture

(30) Priorität: 25.01.1997 DE 19702675
(43) Veröffentlichungstag der Anmeldung: 29.07.1998
(73) Patentinhaber: Continental Aktiengesellschaft, 30165 Hannover (DE)
(72) Erfinder: Schmalz, Manfred, 2352 Gumpoldskirchen (AT)

(56) Entgegenhaltungen:
- EP-A- 0 325 552
- EP-A- 0 598 300
- EP-A- 0 654 366
- EP-A- 0 655 353
- US-A- 4 676 290
- PATENT ABSTRACTS OF JAPAN vol. 018, no. 177 (M-1582), 25. März 1994 (1994-03-25) & JP 05 338415 A (BRIDGESTONE CORP), 21. Dezember 1993 (1993-12-21)

## Beschreibung

Die Erfindung betrifft einen Luftreifen für PKW gemäß dem Oberbegriff des Anspruches 1.

Ein derartiger Luftreifen ist aus der EP 0 325 552 A2 bekannt. Bei der aus Fig. 9 dieser Druckschrift bekannten Ausführung eines Laufstreifens sind zwei breite, gerade verlaufene Umfangsnuten vorgesehen, die gemeinsam mit schmäleren, zickzack- oder wellenförmig verlaufenden Umfangsnuten eine Gliederung des Laufstreifens in Blöcke bewirken.

Im Hinblick auf die unter Berücksichtigung der sicherheitrelevanten Auslegungsrichtlinien bei der Profilgestaltung ebenfalls zu beachtenden Anforderungen an den Fahrkomfort ist insbesondere die Geräuschminderung beim Abrollen zu betrachten, die durch profilgestalterische Maßnahmen wesentlich beeinflusst werden kann.

Die EP 391 600 A2 zeigt hierzu ein in Seitenbereiche und in einen Mittenbereich eingeteiltes Profilmuster mit in den Seitenbereichen geneigt zur Umfangsrichtung verlaufenden Quemuten, wobei in jeder dieser Quemuten eine Schalldrossel 13 vorgesehen ist, welche aus einer quer zur Nut ausgebildeten Rippe besteht. Diese Rippe verkürzt und verhindert die in den Quernuten sich ausbildende und zur Geräuschentwicklung beitragende schwingende Luftsäule.

Nachteilig bei der gezeigten Profilanordnung ist es jedoch, dass eine große Anzahl von in Umfangsrichtung gleich langen Profilklötzen, sowohl im Mitten- als auch im Außenbereich vorhanden ist, so dass beim Abrollen eine zur Resonanz neigende gleichförmige Schwingung aufgebaut wird, die wiederum der Minderung des Geräuschpegels entgegenwirkt.

Ebenfalls eine Maßnahme zur Verminderung der Geräuschemission zeigt das in der DE-A-3907074 offenbarte Profil, bei dem spitzwinklig gegenüber der Umfangsrichtung angeordnete Diagonalprofilelemente vorhanden sind. Im Schulterbereich sind diese über den gesamten Reifen gleich ausgeführten Profilelemente verbreitert und abgewinkelt und weisen je eine zusätzliche Schulterrille auf. Diese Schulterrillen sind am gesamten Reifen gleich lang. Damit soll ohne Umfangsrillen insbesondere ein Reifen mit guten Nasslaufeigenschaften erzielt werden, der hohe Nassrutschfestigkeit und auch verminderte Geräuschemission aufweist. Letzteres dürfte aber aufgrund der über den gesamten Reifen gleichmäßigen Profilgestaltung durch die bereits genannte Gefahr des Aufbaus einer gleichförmigen und resonanzgeneigten Schwingung nur unbefriedigend erzielt werden.

Für die Erfindung bestand daher die Aufgabe, ein Reifenprofil vorzusehen, welches neben einem guten Abriebverhalten und einer hohen Nassrutschfestigkeit eine Verminderung der Geräuschemission sicherstellt und die Resonanzempfindlichkeit vermindert.

Gelöst wird diese Aufgabe durch den Hauptanspruch. Vorteilhafte Weiterbildungen sind in den Unteransprüchen enthalten.

Die Minderung der Geräuschemission in Bezug auf Resonanzerscheinungen durch gleichförmige-Anregungen gleichförmiger Profilblöcke wird in vorteilhafter Weise dadurch begünstigt, dass die Krümmungsmittelpunkte der mit größerer Krümmung versehenen Mittelteile der in Umfangsrichtung benachbarten Quernuten der mittleren Stollenreihen zueinander jeweils axial versetzt angeordnet sind.

Durch eine solche Ausbildung der Quernuten ergibt sich beim Abrollen des Reifens ein breites und nicht zum Aufschwingen bzw. zur Resonanz neigendes Frequenzspektrum dadurch, dass die nacheinander zum Einlaufen in die Aufstandsfläche gelangenden Profilblöcke in jeder senkrecht zur Reifenachse gedachten Schnittebene der mittleren Stollenreihen unterschiedlich sind und sich über die Profilblöcke zusätzlich ständig in ihrer Unterschiedlichkeit ändern. Dieser Effekt läßt sich zusätzlich durch Änderung des Versatzes der Krümmungsmittelpunkte beeinflussen.

Eine solche Ausbildung sichert zum einen das "sanfte" Einlaufen und Auslaufen von Profilteilen in bzw. aus dem Aufstandsbereich und erschwert durch die Krümmung der Quemuten und die dadurch entstehende Richtungsumkehr die Ausbildung einer schwingenden Luftsäule bzw. verkürzt eine solche.

Ein weiterer Vorteil einer solchen Ausbildung besteht darin, dass bei einer solchen Profilausbildung die bei der Herstellung benötigten Vulkanisationsformen einem verminderten Verschleiß unterliegen.

Zudem reduzieren auch die korrespondierend ineinander übergehenden Quernuten die Geräuschemission im Vergleich zu versetzt angeordneten Quernuten, deren Öffnung dann jeweils einer geschlossenen Kante des benachbarten Profilblocks gegenüberläge.

Vorteilhafterweise sind die den äußeren Stollenreihen nächstliegenden Kanten der Profilblöcke der mittleren Stollenreihen mindestens teilweise mit im wesentlichen parallel zu den Ein- bzw. Auslaufteilen der in Umfangsrichtung benachbarten Quernuten ausgerichteten Sacknuten versehen. Da nämlich durch den bereits genannten Versatz der Mittelpunkte die in Umfangsrichtung liegenden Kanten der mittleren Profilblöcke auf einer Seite jeweils mehr oder weniger verlängert werden, kann man mit einer solchen Sacknut dem Auftreten unterschiedlichen Abriebs bei den in die Aufstandsfläche vor- und nachlaufend eintretenden Profilteilen, d.h. dem "Sägezahneffekt" vorbeugen. In aller Regel genügt es jedoch, diese Maßnahme an den äußeren Kanten der jeweils außenliegenden der mittleren Stollenreihen vorzusehen, da sich dort der unterschiedliche Abrieb am stärksten bemerkbar macht.

In Koordination mit der sich durch das Einbringen von Sacknuten ändernden Steifigkeit der Profilblöcke erreicht man eine praxisgerechte Anpassung vorteilhafterweise dadurch, dass die Tiefe der Sacknuten geringer ist als die Tiefe der die Stollenreihen untereinander trennenden in Umfangsrichtung verlaufenden Nuten und zur Reifenmitte hin abnimmt.

In einer weiteren vorteilhaften Ausbildung ist die Tiefe der Quemuten der mittleren Stollenreihen im Bereich der mit geringer Krümmung versehenen bzw. annähernd geraden Einlauf- oder Auslaufteile durch eine Grundanhebung reduziert. Hierdurch löst man auf besonders einfache Weise eventuell sich durch den Versatz der Krümmungsmittelpunkte in den "spitzen Ecken" der Einlauf- bzw. Auslaufteile sich ergebende und auf einer zu großen Weichheit der Profilblöcke beruhenden Verschleiß- bzw. Abrissprobleme. Eine Grundanhebung um jeweils die Hälfte der Tiefe der Quernut ist hierbei aus fertigungstechnischen Gründen vorteilhaft.

Eine weitere gleichwirkende Maßnahme, die insbesondere bei großem Versatz der Krümmungsmittelpunkte sinnvoll ist, ergibt sich dadurch, dass die durch die die Stollenreihen untereinander trennenden in Umfangsrichtung verlaufenden Nuten und die Einlauf- oder Auslaufteile der Quemuten eingeschlossenen Spitzen der Profilblöcke pyramidenförmig bis auf die Quernuttiefe abgeschrägt sind. Eine solche Ausbildung bietet sich insbesondere dort zusätzlich an, wo bereits im Bereich der Quemuten eine Grundanhebung vorhanden ist, da in diesen Bereichen ein jeweils besonders spitzwinkliger Auslauf der Profilblöcke vorhanden ist.

In einer weiteren vorteilhaften Ausbildung sind die Profilblöcke der äußeren Stollenreihen mit weiteren gekrümmten und sich lediglich über Teilbreiten der Profilblöcke erstreckenden Quemuten versehen, die von einer zur Umfangsrichtung parallelen Kante der Profilblöcke und von einer sich lediglich über Teillängen der Klötze erstreckenden Längsnut begrenzt werden.

Im Sinne einer Minimierung des Abriebs und der Resonanzneigung durch einerseits kurze und andererseits unterschiedlich lange ablaufende Profilblöcke stellt diese Ausbildung auch in den Reifenschultem gleichwirkende Elemente bereit, wobei insbesondere durch die grundsätzlich vorhandene Krümmung der Quemuten ein bereits leises Abrollen vorhanden ist.

Zur weiteren Vergleichmäßigung der Steifigkeit der Profilblöcke und damit zur Verminderung eines stufenförmigen und ungleichmäßigen Abriebs besteht eine weitere vorteilhafte Ausbildung darin, dass parallel zur Längsachse der sich lediglich über Teilbreiten der Profilblöcke erstreckenden Quemuten der äußeren Stollenreihen mindestens eine Lamelle ausgebildet ist, die eine über ihren Verlauf abgestufte veränderliche Tiefe aufweist, wobei mindestens der axial innere Bereich tiefer als die axial äußeren Endbereiche der Quemut ausgebildet ist.

Eine Lamellierung ist jedoch lediglich auf der profilinneren Seite erforderlich, da in den profiläußeren Schulterbereichen die Belastung abnimmt.

Anhand eines Ausführungsbeispiels soll die Erfindung näher verdeutlicht werden. Es zeigen
- Fig. 1a, 1b: das erfindungsgemäße Profil auf einem abgerollten Teilumfang der Lauffläche jeweils als Hälfte, mittig in Bezug auf die Reifenbreite geteilt
- Fig. 1c: das erfindungsgemäße Profil auf einem abgerollten Teilumfang in der Gesamtansicht über die Reifenbreite
- Fig. 2: die in der Figur 1c gekennzeichneten Schnitte a - a bis e - e innerhalb des Profiles.

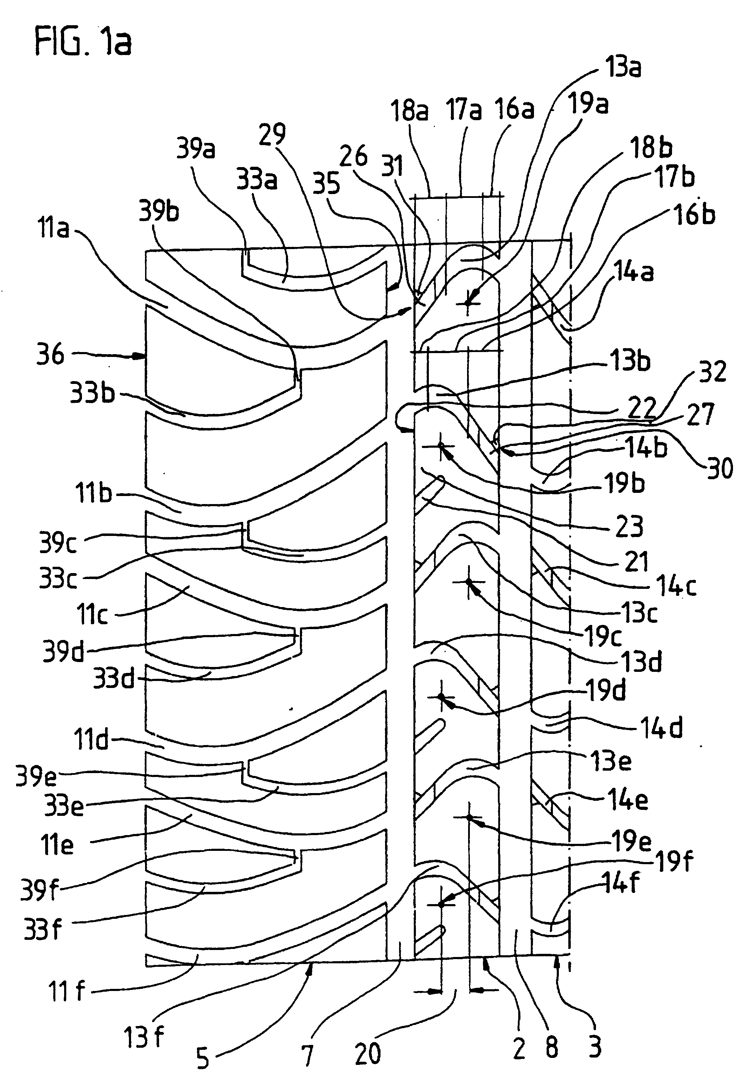

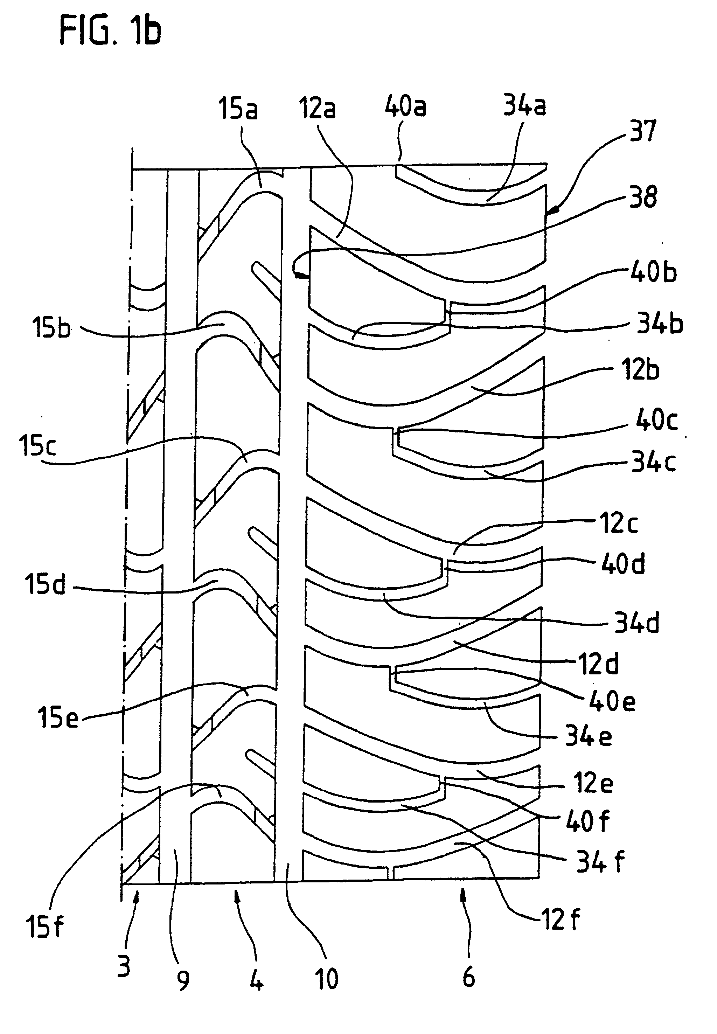

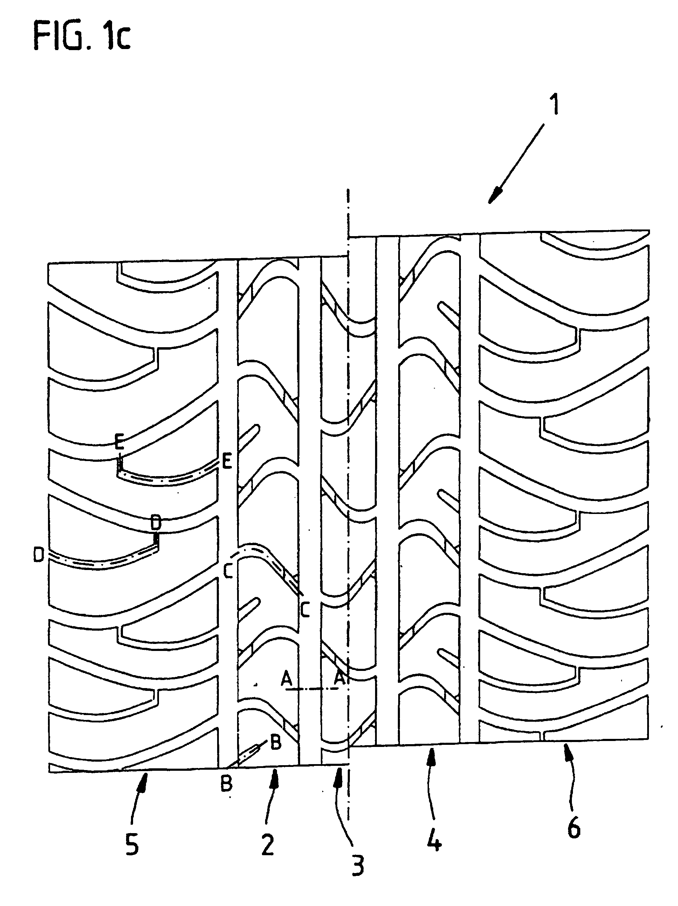

Die Figuren 1a, 1b und 1c zeigen das erfindungsgemäße Profil eines Luftreifens für PKW anhand eines abgewickelten Teilumfanges des Laufstreifens 1. Der Laufstreifen 1 besteht hierbei aus den inneren Stollenreihen 2, 3 und 4 sowie den äußeren Stollenreihen 5 und 6, welche die mittleren Stollenreihen zum jeweiligen Schulterbereich begrenzen.

Die Stollenreihen sind hierbei untereinander durch in Umfangsrichtung verlaufende Nuten 7, 8, 9 und 10 getrennt. Die einzelnen Profilblöcke der Stollenreihen sind jeweils voneinander jeweils durch im wesentlichen axial und gekrümmt verlaufende Quemuten 11a - f, 12a - f, 13a - f, 14a - f und 15a - f getrennt.

Die in Umfangsrichtung verlaufenden Nuten sind hierbei im Querschnitt leicht trapezförmig ausgebildet, damit einerseits eine hohe Scherkraft beim Aufbau von beim Abrollen eindringenden Materialsäulen erreicht wird und zum anderen eine leichte Entformung aus den Vulkanisierformen erreicht wird.

Die Quemuten einer Stollenreihe sind dabei an alle gleichsinnig gekrümmt, wie man z.B. an der mittleren Stollenreihe 2 und den dort die einzelnen Profilblöcke trennenden Quemuten 13a - f erkennt.

Wie exemplarisch anhand der Quemut 13a dargestellt, bestehen die Quemuten über ihren axialen Verlauf aus jeweils einem mit geringer Krümmung versehenem bzw. annähernd geradem Einlaufteil 16a, einem mit relativ zur Krümmung des Einlaufteiles größerer Krümmung versehenen Mittelteil 17a und mit einem mit geringerer Krümmung versehenem bzw. annähernd geradem Auslaufteil 18a.

Korrespondierende Quernuten axial benachbarter Stollenreihen sind in Bezug zur Umfangsrichtung dabei jeweils abwechselnd konvex und konkav gekrümmt ausgebildet, wie anhand der korrespondierenden Quemuten 11a, 13a, 14a, 15a und 12a bzw. 11b, 13b, 14b, 15b und 12b etc. zu sehen ist.

Wie weiterhin beispielhaft anhand der Stollenreihe 2 dargestellt, sind die Krümmungsmittelpunkte 19a - 19f der mit größerer Krümmung versehenen Mittelteile der in Umfangsrichtung benachbarten Quemuten der mittleren Stollenreihen zueinander jeweils axial versetzt angeordnet. Den Versatz 20 erkennt man z.B. bei Betrachtung der beiden oberen Profilblöcke der Stollenreihe 2 als Abstand zwischen den Krümmungsmittelpunkten 19e and 19f.

Die den äußeren Stollenreihen 5 und 6 nächstliegenden Kanten der Profilblöcke der mittleren Stollenreihen 2 und 4 sind mindestens teilweise mit im wesentlichen parallel zu den Ein- bzw. Auslaufteilen der in Umfangsrichtung benachbarten Quemuten ausgerichteten Sacknuten versehen. Zur Wahrung einer guten Übersicht zeigt die Figur 1a auch dies lediglich exemplarisch anhand der Sacknut 21, welche parallel zu den Auslaufteilen der Quemuten 18b und 18c angeordnet ist und die nach außen weisende Kante 22 des Profilblockes 23 in zwei Teillängen aufteilt.

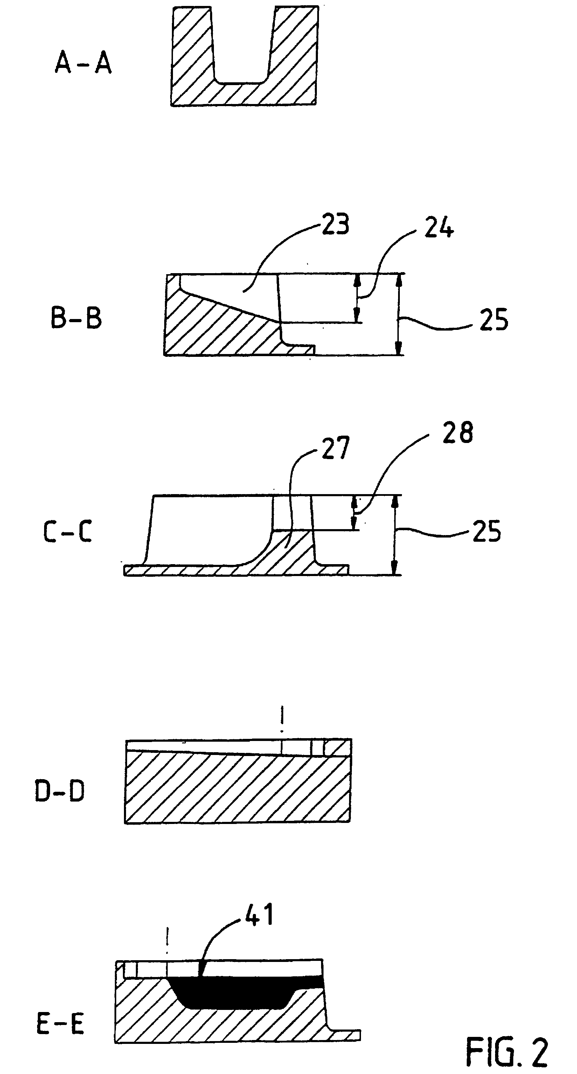

In der Zusammenschau mit der Figur 2 und dem dort dargestellten Schnitt B-B erkennt man, dass die Tiefe 24 der Sacknut 21 geringer ist als die Tiefe 25 der die Stollenreihen 5 und 2 untereinander trennenden in Umfangsrichtung verlaufenden Nut 7 und dass die Tiefe 24 zur Reifenmitte hin abnimmt.

Die Tiefe 24 beträgt hier etwa zwei Drittel der Tiefe 25 der Nut 7.

Ebenfalls in gemeinsamer Sicht der Figuren 1a - 1c und 2 erkennt man, dass die Tiefe der Quemuten 13a, 14a, 15a, 13b, 14b und 15b der mittleren Stollenreihen 2, 3 und 4 im Bereich der mit geringer Krümmung versehenen bzw. annähernd geraden Einlauf- oder Auslaufteile durch eine Grundanhebung 26 bzw. 27 reduziert ist, was wiederum exemplarisch für die Einlauf- oder Auslaufteile 16b bzw. 18a dargestellt ist. Im Schnitt C-C der Figur 2 wird dies verdeutlicht, wobei die Grundanhebung 27 die Nuttiefe 25 um ca. 50% auf die Nuttiefe 28 reduziert.

In der Figur 1a erkennt man auch, dass die durch die die Stollenreihen untereinander trennenden in Umfangsrichtung verlaufenden - beispielhaft genannten - Nuten 7 und 8 und die Einlauf- oder Auslaufteile der Quemuten 18a und 16b eingeschlossenen Spitzen 29 und 30 der Profilblöcke pyramidenförmig mit bis auf Quernuttiefe reichenden Abschrägungen 31 und 32 versehen sind.

In den Figuren 1a und 1b ist weiterhin dargestellt, dass die Profilblöcke der äußeren Stollenreihen 5 und 6 mit weiteren gekrümmten und sich lediglich über Teilbreiten der Profilblöcke erstreckenden Quemuten 33a - f und 34a - f versehen sind, die von einer zur Umfangsrichtung parallelen Kante 35, 36, 37 und 38 der Profilblöcke und von einer sich lediglich über Teillängen der Profilblöcke erstreckenden Längsnut 39a - f und 40a - f begrenzt werden.

Wiederum in der Zusammenschau mit der Figur 2 ist die Lamelle 41 dargestellt, die sich parallel zur Längsachse der sich lediglich über Teilbreiten der Profilblöcke erstreckenden Quernuten 33b, 33d und 33f bzw. 34a, 34c, 34e der äußeren Stollenreihen ausgebildet ist. Ebenfalls erkennt man, dass die Lamelle im axial inneren Bereich tiefer als im axial äußeren Endbereich der Quemut ausgebildet ist.

### Bezugszeichenliste

- 1: Laufstreifen
- 2, 3, 4: mittlere Stollenreihe
- 5, 6: äußere Stollenreihe
- 7, 8, 9, 10: Nut in Umfangsrichtung verlaufend
- 11a - f: Quernut
- 12a - f: "
- 13a - f: "
- 14a - f: "
- 15a - f: "
- 16a - c: Einlaufteil
- 17a - c: Mittelteil
- 18a - c: Auslaufteil
- 19a - f: Krümmungsmittelpunkt
- 20: Versatz der Krümmungsmittelpunkte
- 21: Sacknut
- 22: Kante
- 23: Profilblock
- 24: Tiefe einer Sacknut
- 25: Tiefe einer in Umfangsrichtung verlaufenden Nut
- 26, 27: Grundanhebung
- 28: Tiefe im Bereich einer Grundanhebung
- 29, 30: Spitze eines Profilblocks
- 31, 32: Abschrägung
- 33a - f: Quemut
- 34a - f: Quemut
- 35, 36, 37, 38: Kante eines Profilblocks
- 39a - f: Längsnut
- 40a - f: Längsnut
- 41: Lamelle

## Patentansprüche

1. Luftreifen für PKW mit einer radialen Karkasse, einem über der Karkasse angeordneten Gürtel und einem über dem Gürtel aufgebrachten Laufstreifen (1), bei dem der Laufstreifen (1) in seiner außenliegenden Lauffläche eine Profilierung aufweist, bei der mindestens zwei mittlere Stollenreihen (2, 3, 4)und jeweils eine die mittleren Stollenreihen (2, 3, 4) zum jeweiligen Schulterbereich begrenzende äußere Stollenreihe (5, 6) vorhanden und die Stollenreihen (2, 3, 4, 5, 6) untereinander durch in Umfangsrichtung verlaufende Nuten (7, 8, 9, 10) getrennt sind, wobei die Stollenreihen (2, 3, 4, 5, 6) aus Profilblöcken (23) gebildet sind, die voneinander jeweils durch im wesentlichen axial und gekrümmt verlaufende Quemuten (11a-f, 12a-f, 13a-f, 14a-f, 15a-f) getrennt werden, wobei die Quemuten (11a-f, 12a-f, 13a-f, 14a-f, 15a-f) einer Stollenreihe (2, 3, 4, 5, 6) gleichsinnig gekrümmt ausgebildet sind und über ihren axialen Verlauf aus jeweils einem mit geringer Krümmung versehenem bzw. annähernd geraden Einlaufteil (18a, 18b), einem mit relativ zur Krümmung des Einlaufteiles größerer Krümmung versehenem Mittelteil (17a, 17b), und mit einem mit geringerer Krümmung versehenem bzw. annähernd geraden Auslaufteil (16a, 16b) bestehen, wobei die Quernuten (11a, 13a, 14a, 15a, 12a) axial benachbarter Stollenreihen korrespondierend ineinander übergehen und in Bezug zur Umfangsrichtung jeweils abwechselnd konvex und konkav gekrümmt ausgebildet sind,
**dadurch gekennzeichnet,**
**dass** die Krümmungsmittelpunkte (19a - 19f) der mit größerer Krümmung versehenen Mittelteile der in Umfangsrichtung benachbarten Quemuten (13a - 13f) der mittleren Stollenreihen zueinander jeweils axial versetzt angeordnet sind.

2. Luftreifen nach Anspruch 1, **dadurch gekennzeichnet, dass** die den äußeren Stollenreihen nächstliegenden Kanten (22) der Profilblöcke (23) der mittleren Stollenreihen mindestens teilweise mit im wesentlichen parallel zu den Ein- bzw. Auslaufteilen der in Umfangsrichtung benachbarten Quemuten ausgerichteten Sacknuten (21) versehen sind.

3. Luftreifen nach Anspruch 2, **dadurch gekennzeichnet, dass** die Tiefe (24) der Sacknuten (22) geringer ist als die Tiefe (25) der die Stollenreihen untereinander trennenden in Umfangsrichtung verlaufenden Nuten (7, 10) und zur Reifenmitte hin abnimmt.

4. Luftreifen nach Anspruch 1 bis 3, **dadurch gekennzeichnet, dass** die Tiefe der Quemuten (13a - 13f, 14a - 14f, 15a - 15f) der mittleren Stollenreihen im Bereich der mit geringer Krümmung versehenen bzw. annähernd geraden Einlauf- oder Auslaufteile durch eine Grundanhebung (26, 27) reduziert ist.

5. Luftreifen nach Anspruch 4, **dadurch gekennzeichnet, dass** die Tiefe der Quernuten im Bereich der Grundanhebung um die Hälfte reduziert ist.

6. Luftreifen nach Anspruch 1 bis 5, **dadurch gekennzeichnet, dass** die durch die die Stollenreihen untereinander trennenden in Umfangsrichtung verlaufenden Nuten (7 - 10) und die Einlauf- oder Auslaufteile der Quemuten eingeschlossenen Spitzen der Profilblöcke mit einer pyramidenförmigen Abschrägung (31, 32) bis auf Quernuttiefe versehen sind.

7. Luftreifen nach Anspruch 1 bis 6, **dadurch gekennzeichnet, dass** die Profilblöcke der äußeren Stollenreihen (5, 6) mit gekrümmten und sich lediglich über Teilbreiten der Profilblöcke erstreckenden Quemuten (33a - 33f, 34a - 34f) versehen sind, die von einer zur Umfangsrichtung parallelen Kante der Profilblöcke und von einer sich lediglich über Teillängen der Profilblöcke erstreckenden Längsnut (39a - 39f, 40a - 40f) begrenzt werden.

8. Luftreifen nach Anspruch 7, **dadurch gekennzeichnet, dass** parallel zur Längsachse der sich lediglich über Teilbreiten der Profilblöcke erstreckenden Quemuten (33a - 33f, 34a - 34f) der äußeren Stollenreihen mindestens eine Lamelle (41) ausgebildet ist, die eine über ihren Verlauf abgestufte und veränderliche Tiefe aufweist, wobei mindestens der axial innere Bereich tiefer als die axial äußeren Endbereiche der Quernut ausgebildet ist.

## Claims

1. Pneumatic tyre for passenger vehicles, having a radial carcase, a belt disposed over the carcase, and a tread strip (1) placed over the belt, wherein the tread strip (1) has a profiling portion in its externally situated tread surface, in which profiled portion at least two central rows of supports (2, 3, 4) and one respective outer row of supports (5, 6), which defines the central rows of supports (2, 3, 4) relative to the respective shoulder region, are provided, and the rows of supports (2, 3, 4, 5, 6) are separated from one another by grooves (7, 8, 9, 10) which extend in the circumferential direction, the rows of supports (2, 3, 4, 5, 6) being formed from profile blocks (23), which are separated from one another by transverse grooves (11a-f, 12a-f, 13a-f, 14a-f, 15a-f) respectively, which extend in a substantially axial and curved manner, the transverse grooves (11a-f, 12a-f, 13a-f, 14a-f, 15a-f) of one row of supports (2, 3, 4, 5, 6) being curved in the same direction and comprising, over their axial configuration, a respective initial part (18a, 18b) which is provided with a small curvature or respectively is approximately rectilinear, a central part (17a, 17b), which is provided with a greater curvature relative to/than the curvature of the initial part, and a final part (16a, 16b) which is provided with a smaller curvature or respectively is approximately rectilinear, the transverse grooves (11a, 13a, 14a, 15a, 12a) of axially adjacent rows of supports passing into one another in a corresponding manner and being curved alternately convexly and concavely relative to the circumferential direction, **characterised in that** the centres of curvature (19a - 19f) of the central parts, provided with a greater curvature, of the transverse grooves (13a - 13f), which are adjacent one another when viewed with respect to the circumferential direction, of the central rows of supports are disposed so as to be axially offset from one another.

2. Pneumatic tyre according to claim 1, **characterised in that** the edges (22) of the profile blocks (23) of the central rows of supports situated nearest the outer rows of supports are provided, at least partially, with blind grooves (21) which are orientated substantially parallel to the initial and final parts respectively of the transverse grooves which are adjacent one another when viewed with respect to the circumferential direction.

3. Pneumatic tyre according to claim 2, **characterised in that** the depth (24) of the blind grooves (21) is smaller than the depth (25) of the grooves (7, 10), which separate the rows of supports from one another and extend in the circumferential direction, and said depth (24) decreases towards the centre of the tyre.

4. Pneumatic tyre according to claims 1 to 3, **characterised in that** the depth of the transverse grooves (13a - 13f, 14a - 14f, 15a - 15f) of the central rows of supports in the region of the initial or final parts, which are provided with a small curvature or respectively are approximately rectilinear, is reduced by a basic raised portion (26, 27).

5. Pneumatic tyre according to claim 4, **characterised in that** the depth of the transverse grooves is reduced by half in the region of the basic raised portion.

6. Pneumatic tyre according to claims 1 to 5, **characterised in that** the tips of the profile blocks, which are enclosed by the grooves (7 - 10), which separate the rows of supports from one another and extend in the circumferential direction, and by the initial or final parts of the transverse grooves, are provided with a pyramidal tapering (31, 32) up to the depth of the transverse grooves.

7. Pneumatic tyre according to claims 1 to 6, **characterised in that** the profile blocks of the outer rows of supports (5, 6) are provided with curved transverse grooves (33a - 33f, 34a - 34f), which extend only over partial widths of the profile blocks and are defined by one edge of the profile blocks parallel to the circumferential direction and by one longitudinal groove (39a - 39f, 40a - 40f) which extends only over partial lengths of the profile blocks.

8. Pneumatic tyre according to claim 7, **characterised in that** at least one lamella (41) is provided parallel to the longitudinal axis of the transverse grooves (33a - 33f, 34a - 34f) of the outer rows of supports, said grooves extending only over partial widths of the profile blocks, said lamella having a depth which is graduated and variable over its course, at least the axially internal region being deeper than the axially outer end regions of the transverse groove.

## Revendications

1. Pneumatique pour voiture de tourisme, comprenant une carcasse radiale, une ceinture disposée par-dessus la carcasse et une bande de roulement (1) appliquée sur la ceinture, pneumatique dans lequel la bande de roulement (1) comprend, dans sa surface de roulement extérieure, des sculptures dans lesquelles sont présentes au moins deux rangées centrales de crampons (2, 3, 4) et, à chaque fois, une rangée extérieure de crampons (5, 6) délimitant les rangées centrales de crampons (2, 3, 4) par rapport à la zone respective d'épaulement, et les rangées de crampons (2, 3, 4, 5, 6) sont séparées les unes des autres par des rainures (7, 8, 9, 10) s'étendant dans la direction périphérique, où les rangées de crampons (2, 3, 4, 5, 6) sont constituées de blocs de sculpture (23) qui sont séparés les uns des autres, à chaque fois, par des rainures transversales (11a-f, 12a-f, 13a-f, 14a-f, 15a-f) s'étendant pratiquement axialement et de façon courbée, où les rainures transversales (11a-f, 12a-f, 13a-f, 14a-f, 15a-f) d'une rangée de crampons (2, 3, 4, 5, 6) sont conformées en étant courbées dans le même sens et, sur leur étendue axiale, se composent à chaque fois d'une partie initiale (18a, 18b) à faible courbure ou presque droite, d'une partie centrale (17a, 17b) à plus grande courbure par rapport à la courbure de la partie initiale et d'une partie terminale (16a, 16b) à plus faible courbure ou presque droite, où les rainures transversales (11a, 13a, 14a, 15a, 12a) passent les unes dans les autres, de façon correspondant à des rangées de crampons voisines axialement et sont conformées de façon courbée, en alternant à chaque fois les parties convexes et concaves par rapport à la direction périphérique,
**caractérisé**
**en ce que** les points milieux de courbure (19a - 19f) des parties centrales - à plus grande courbure - des rainures transversales (13a - 13f) - voisines dans la direction périphérique - des rangées centrales de crampons sont disposés en étant à chaque fois décalés axialement les uns par rapport aux autres.

2. Pneumatique selon la revendication 1, **caractérisé en ce que** les bords (22) - les plus près des rangées extérieures de crampons - des blocs de sculpture (23) des rangées centrales de crampons sont dotés, au moins partiellement, de rainures pleines (21) orientées pratiquement parallèlement aux parties initiales ou terminales des rainures transversales voisines dans la direction périphérique.

3. Pneumatique selon la revendication 2, **caractérisé en ce que** la profondeur (24) des rainures pleines (21) est plus faible que la profondeur (25) des rainures (7, 10) s'étendant dans la direction périphérique et séparant les rangées de crampons les unes des autres, et diminue en allant vers le milieu du pneumatique.

4. Pneumatique selon les revendications 1 à 3, **caractérisé en ce que** la profondeur des rainures transversales (13a - 13f, 14a - 14f, 15a - 15f) des rangées centrales de crampons est réduite par un soulèvement du fond (26, 27) dans la zone des parties initiales ou terminales à faible courbure ou presque droites.

5. Pneumatique selon la revendication 4, **caractérisé en ce que** la profondeur des rainures transversales est réduite de moitié dans la zone du soulèvement du fond.

6. Pneumatique selon les revendications 1 à 5, **caractérisé en ce que** les pointes des blocs de sculpture entourées par les rainures (7 - 10) s'étendant en direction périphérique et séparant les rangées de crampons les unes des autres, et par les parties initiales ou terminales des rainures transversales, sont dotées d'un chanfreinage (31, 32) en forme de pyramide, jusqu'à la profondeur de la rainure transversale.

7. Pneumatique selon les revendications 1 à 6, **caractérisé en ce que** les blocs de sculpture des rangées extérieures de crampons (5, 6) sont dotés de rainures transversales (33a - 33f, 34a - 34f) courbées et s'étendant seulement sur des largeurs partielles des blocs de sculpture, lesquelles rainures transversales sont délimitées par un bord des blocs de sculpture parallèle à la direction périphérique, et par une rainure longitudinale (39a - 39f, 40a - 40f) s'étendant seulement sur des longueurs partielles des blocs de sculpture.

8. Pneumatique selon la revendication 7, **caractérisé en ce qu'**au moins une lamelle (41) est conformée parallèlement à l'axe longitudinal des rainures transversales (33a - 33f, 34a - 34f) des rangées extérieures de crampons s'étendant seulement sur des largeurs partielles des blocs de sculpture, laquelle lamelle comprend une profondeur graduelle et variable sur son étendue, où au moins la zone intérieure, axialement, est conformée en étant plus profonde que les zones d'extrémités extérieures - axialement - de la rainure transversale.
